# EUROPEAN PATENT APPLICATION

(11) **EP 4 428 998 A1**
(43) Date of publication of application: **11.09.2024**
(21) Application number: 23861684.1
(22) Date of filing: 18.01.2023
(51) Int. Cl.: H01M 50/209

(54) **BATTERY CELL, BATTERY, AND ELECTRIC DEVICE**

(71) Applicant: Contemporary Amperex Technology Co., Limited, Ningde, Fujian 352100 (CN)
(72) Inventor: KE, Haibo, Ningde, Fujian 352100 (CN); CHEN, Yanlin, Ningde, Fujian 352100 (CN); LI, Quankun, Ningde, Fujian 352100 (CN); GAO, Kai, Ningde, Fujian 352100 (CN); LU, Xiaokang, Ningde, Fujian 352100 (CN); Wang, Peng, Ningde, Fujian 352100 (CN); Jin, Haizu, Ningde, Fujian 352100 (CN)
(74) Representative: Thoma, Michael
(86) International application number: PCT/CN2023/072954
(87) International publication number: WO 2024/152260

(57) **Abstract**

This application provides a battery cell, a battery, and an electric apparatus. The battery cell (200) includes an electrode assembly (300), a first electrode terminal (431), and a second electrode terminal (432). The electrode assembly (300) includes a body portion (30), where a first tab (34), a second tab (35), and an auxiliary tab (36) are led out of the body portion (30). The first tab (34) and the auxiliary tab (36) are both electrically connected to the first electrode terminal (431), and the second tab (35) is electrically connected to the second electrode terminal (432). The first tab (34) and the auxiliary tab (36) are both electrically connected to the first electrode terminal (431) to increase a current flow area of the tab electrically connected to the first electrode terminal (431), thereby increasing the current flow capacity of the tab electrically connected to the first electrode terminal (431) and consequently improving the performance of the battery cell (200).

## Description

### TECHNICAL FIELD

This application pertains to the field of battery technologies, and more specifically, to a battery cell, a battery, and an electric apparatus.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

Current flows in an electrode assembly of a battery cell mainly through tabs to form a circuit to enable charging and discharging of the electrode assembly. The current flow capacity of the tabs of the electrode assembly greatly affects the charging and discharging power of the electrode assembly. However, in some cases, the current flow capacity of a certain tab of the electrode assembly may be relatively low, affecting the charging and discharging performance of the battery cell.

### TECHNICAL PROBLEM

A purpose of the embodiments of this application is to provide a battery cell, a battery, and an electric apparatus to solve the problem of low current flow capacity of tabs in the related art.

### TECHNICAL SOLUTION

According to a first aspect, an embodiment of this application provides a battery cell including an electrode assembly, a first electrode terminal, and a second electrode terminal, where the electrode assembly includes a body portion, where a first tab, a second tab, and an auxiliary tab are led out of the body portion, the first tab and the auxiliary tab are both electrically connected to the first electrode terminal, and the second tab is electrically connected to the second electrode terminal.

In the technical solution of this embodiment of this application, the first tab, the second tab, and the auxiliary tab are provided on the body portion of the electrode assembly, both the first tab and the auxiliary tab are electrically connected to the first electrode terminal, and the second tab is electrically connected to the second electrode terminal, so that width of the tab electrically connected to the first electrode terminal on the body portion is increased, thereby increasing a current flow area of the tab electrically connected to the first electrode terminal and increasing the current flow capacity of the tab electrically connected to the first electrode terminal.

In some embodiments, the first tab is located at an end of the body portion in a width direction of the body portion, and an end of the auxiliary tab away from the first tab extends beyond the middle of the body portion in the width direction of the body portion.

In the above structural design, the auxiliary tab is provided at a side of the first tab close to width of the body portion to facilitate design and manufacturing. The auxiliary tab extending beyond the middle of the body portion along the width direction of the body portion allows for a sufficient width on the body portion for the design of the auxiliary tab.

In some embodiments, in the width direction of the body portion, a ratio of a sum of lengths of the auxiliary tab and the first tab to width of the body portion ranges from 0.5 to 1.

The foregoing structural design enables the sum of widths of the first tab and the auxiliary tab to be greater than or equal to half of width of the body portion, so that the tab electrically connected to the first electrode terminal has a large width and therefore a large current flow area, thereby increasing the current flow capacity of the tab electrically connected to the first electrode terminal.

In some embodiments, a sum of the current flow areas of the first tab and the auxiliary tab is greater than or equal to the current flow area of the second tab.

The foregoing structural design allows for a large current flow area of the tab electrically connected to the first electrode terminal. This can increase the current flow capacity of the tab electrically connected to the first electrode terminal, thereby increasing the current flow capacity of the battery cell.

In some embodiments, the first tab includes a first tab root portion and a first tab body, width of the first tab root portion is greater than width of the first tab body, and the first tab body protrudes out of the body portion.

Configuring the first tab root portion to be connected to the body portion and configuring width of the first tab root portion to be greater than width of the first tab body can improve the current conducting capability of the first tab; and providing the first tab body for ease of connection to the first electrode terminal is conducive to assembly and connection.

In some embodiments, the auxiliary tab includes an auxiliary tab root portion, and in a thickness direction of the body portion, the auxiliary tab root portion has an overlapping area with the second tab.

Configuring the auxiliary tab root portion to be connected to the body portion and making the auxiliary tab root portion and the second tab to have an overlapping area allows for a sufficient width on the body portion for the design of the auxiliary tab, which enables the provision of a wider auxiliary tab to increase the current flow area.

In some embodiments, an insulating structure is provided between the auxiliary tab root portion and the second tab.

Providing the insulating structure ensures good insulation between the auxiliary tab root portion and the second tab, avoiding a short circuit between the auxiliary tab root portion and the second tab.

In some embodiments, the second tab includes a second tab root portion and a second tab body. The second tab root portion is connected to the body portion, and the second tab body protrudes out of the body portion. In a height direction of the body portion, the auxiliary tab root portion is level with the second tab root portion. The body portion includes a separator located between the auxiliary tab root portion and the second tab root portion, and a portion of the separator that extends to between the auxiliary tab root portion and the second tab root portion forms an insulating structure.

Configuring the second tab root portion to be connected to the body portion, and making the auxiliary tab root portion be level with the second tab root portion allow the separator of the body portion to extend to between the auxiliary tab root portion and the second tab root portion to ensure good insulation between the auxiliary tab root portion and the second tab, preventing a short circuit between the auxiliary tab root portion and the second tab.

In some embodiments, the second tab includes a second tab root portion and a second tab body, the second tab root portion is connected to the body portion, and the second tab body protrudes out of the body portion; and in a height direction of the body portion, height of the auxiliary tab root portion is greater than height of the second tab root portion.

Configuring height of the auxiliary tab root portion to be greater than height of the second tab root portion is conducive to the provision of the auxiliary tab root portion, increases the current flow capacity of the auxiliary tab root portion, and also facilitates the provision of an insulating structure between the auxiliary tab root portion and the second tab root portion.

In some embodiments, the body portion includes a separator located between the auxiliary tab root portion and the second tab root portion, where the separator protrudes out of the auxiliary tab root portion in the height direction of the body portion, and a portion of the separator protruding out of the second tab root portion forms the insulating structure.

Configuring the separator of the body portion to protrude out of the auxiliary tab root portion enables the separator to be positioned between the auxiliary tab root portion and the second tab root portion when the second tab bodies are stacked and pressed together, thereby ensuring good insulation.

In some embodiments, height by which the separator protruding out of the auxiliary tab root portion is greater than or equal to 2 mm.

Configuring the separator of the body portion to protrude out of the auxiliary tab root portion by more than 2 millimeters (mm) ensures good insulation between the auxiliary tab root portion and the second tab root portion when the second tab bodies are stacked and pressed together.

In some embodiments, the insulating structure includes an insulating adhesive provided on the auxiliary tab root portion and/or the second tab.

The insulating adhesive is provided on the auxiliary tab root portion and/or the second tab to implement insulation between the auxiliary tab root portion and the second tab root portion, allowing for a simple structure, facilitates arrangement, and ensuring the insulation effect.

In some embodiments, a first insulating plate is affixed to a side of the second tab close to the auxiliary tab.

The second tabs need to be pressed together, so that after a second tab is bent and connected with the second electrode terminal, the first insulating plate affixed on the side of the second tab close to the auxiliary tab provides an effective insulation and protection function. In addition, it can also protect the second tab, and prevent burrs produced in the welding of the second tab with the second electrode terminal from affecting the auxiliary tab.

In some embodiments, the second tab includes the second tab root portion and the second tab body, the second tab root portion is connected to the body portion, the second tab body protrudes out of the body portion, and the second tab root portion has a width greater than width of the second tab body.

Configuring the second tab root portion to be connected to the body portion and configuring width of the second tab root portion to be greater than width of the second tab body can improve the current conducting capability of the second tab; and providing the second tab body for ease of connection to the second electrode terminal is conducive to assembly and connection.

In some embodiments, the first tab is integrally formed with the auxiliary tab. This allows the first tab and the auxiliary tab to form a larger piece of tab for ease of manufacturing.

In some embodiments, the first tab and the auxiliary tab are provided as separate parts. This allows for convenient positioning of the auxiliary tab, and also facilitates the provision of an insulating structure between the auxiliary tab and the second tab.

In some embodiments, the first tab is spaced apart from the auxiliary tab, the auxiliary tab includes the auxiliary tab root portion and an auxiliary tab body, the auxiliary tab root portion is connected to the body portion, and the auxiliary tab body protrudes out of the body portion and is electrically connected to the first electrode terminal.

The first tab is spaced apart from the auxiliary tab to facilitate the positioning of the auxiliary tab, and the auxiliary tab includes the auxiliary tab body for convenient electrical connection to the first electrode terminal.

In some embodiments, width of the auxiliary tab root portion is greater than width of the auxiliary tab body. This not only facilitates connection between the auxiliary tab body and the first electrode terminal, but can also improve the current conducting capability of the auxiliary tab root portion.

In some embodiments, the body portion has a first end surface, the first tab and the second tab are led out of the first end surface, a region of the body portion at the auxiliary tab root portion protrudes out of the first end surface to form a step, a support zone is formed in the middle of the first end surface in a width direction of the first end surface, the support zone is located at a side of the step, and the battery cell further includes an end cover, the end cover being provided with a protruding lug boss that resists against the support zone.

A step is formed in a region corresponding to the auxiliary tab root portion, a support zone is formed at a side of the step, and a lug boss is provided on the end cover and resists against the support zone for better support of the end cover.

In some embodiments, height of the lug boss is greater than height of the step. This can prevent the end cover from squeezing the step when the lug boss of the end cover resists against the support zone, providing protection to the auxiliary tab root portion.

In some embodiments, height of the lug boss is at least 2 mm greater than height of the step. This structural configuration can better prevent the end cover from squeezing the step, protecting the auxiliary tab root portion.

In some embodiments, the electrode assembly is provided in plurality and the plurality of electrode assemblies are stacked, and on the end cover, a lug boss is provided at each position corresponding to each of the support zones.

Stacking the plurality of electrode assemblies can increase the capacity of the battery cell; and providing a lug boss corresponding to each support zone on the end cover allows the body portion of each electrode assembly to support the end cover.

In some embodiments, in the thickness direction of the body portion, there are N steps between two adjacent lug bosses, a distance between two adjacent lug bosses is W, a width of each of the steps is K, and W ≥ N * K + 2 mm.

Configuring the distance between two adjacent lug bosses to be 2 mm greater than the sum of widths of the steps between the two lug bosses allows the lug bosses to resist against the support zone without squeezing the steps.

In some embodiments, in the thickness direction of the body portion, width of each of the lug bosses is less than width of the support zone, and width of the lug boss is greater than 2 mm.

Width of the lug boss being less than width of the support zone allows the support zone to support the lug boss well; and width of the lug boss being greater than 2 mm can ensure the structural strength of the lug boss.

In some embodiments, the battery cell further includes a first current collecting member and a second current collecting member, where the first current collecting member connects the first tab and the auxiliary tab to the first electrode terminal, and the second current collecting member connects the second tab to the second electrode terminal.

With the first current collecting member provided, the first tab and the auxiliary tab are conveniently connected to the first electrode terminal; and with the second current collecting member provided, the second tab is conveniently connected to the second electrode terminal, facilitating assembly.

In some embodiments, the battery cell includes a plurality of electrode assemblies, where the plurality of electrode assemblies are divided into two groups, the two electrode assembly groups being opposite each other.

Stacking the plurality of electrode assemblies can increase the capacity of the battery cell; and dividing the plurality of electrode assemblies into two groups and disposing the two groups of electrode assemblies opposite each other allow the tabs of the two groups of electrode assemblies to connect to the corresponding electrode terminals, separately. Then the two groups of electrode assemblies fit together to form a single piece, facilitating assembly.

In some embodiments, the electrical conductivity of the first tab is less than the electrical conductivity of the second tab. However, the first tab and the auxiliary tab are both connected to the first electrode terminal, so that the sum of the current flow capacities of the first tab and the auxiliary tab is substantially the same as the current flow capacity of the second tab. As a result, the overall current flow capacity of the battery cell is ensured.

In some embodiments, thickness of the first tab is less than thickness of the second tab. This makes the current flow capacity of the first tab to be less than the current flow capacity of the second tab. However, the first tab and the auxiliary tab are both connected to the first electrode terminal, so that the sum of the current flow capacities of the first tab and the auxiliary tab is substantially the same as the current flow capacity of the second tab. As a result, the overall current flow capacity of the battery cell is ensured.

In some embodiments, the battery cell further includes a first electrode plate, the first electrode plate includes an insulating substrate and conductive layers provided on two sides of the insulating substrate, respectively; and the first tab leads out of each of the conductive layers, and the auxiliary tab leads out of at least one of the conductive layers.

Providing the insulating substrate between the two conductive layers allows for a smaller thicknesses of the two conductive layers, so that when the first electrode plate is being cut, or when a foreign object pierces the first electrode plate, burrs produced on the conductive layers are small and can hardly pierce the insulating substrate, thereby reducing the risk of a short circuit and improving the safety performance. Leading out the auxiliary tab from at least one conductive layer can improve the current flow capacity.

According to a second aspect, an embodiment of this application provides a battery including the battery cell according to the foregoing embodiments.

According to a third aspect, an embodiment of this application provides an electric apparatus including the battery according to the foregoing embodiments.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BENEFICIAL EFFECTS

### BRIEF DESCRIPTION OF DRAWINGS

To describe the technical solutions in the embodiments of this application more clearly, the following briefly describes the accompanying drawings required for describing the embodiments or exemplary art. Apparently, the accompanying drawings in the following description show merely some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a combination of an end cover and an electrode assembly shown in FIG. 3;
FIG. 5 is a schematic structural diagram of the electrode assembly shown in FIG. 3 after tabs are stacked;
FIG. 6 is a schematic structural diagram of the electrode assembly shown in FIG. 5 after the tabs are bent;
FIG. 7 is a schematic structural diagram of an electrode assembly according to some embodiments of this application;
FIG. 8 is a schematic structural diagram of a first electrode plate shown in FIG. 7;
FIG. 9 is a schematic structural diagram of a second electrode plate shown in FIG. 7;
FIG. 10 is a schematic structural diagram of an electrode assembly according to some other embodiments of this application;
FIG. 11 is a schematic structural diagram of an electrode assembly according to still some other embodiments of this application;
FIG. 12 is a schematic structural diagram of an electrode assembly according to yet some other embodiments of this application;
FIG. 13 is a schematic structural diagram of an electrode assembly according to some embodiments of this application;
FIG. 14 is a schematic structural diagram of a first electrode plate according to some embodiments of this application;
FIG. 15 is a schematic structural exploded view of a battery cell according to some embodiments of this application;
FIG. 16 is a schematic structural diagram of a combination of an end cover and an electrode assembly shown in FIG. 15;
FIG. 17 is a schematic structural diagram of the electrode assembly shown in FIG. 15 unfolded relative to the end cover;
FIG. 18 is a schematic structural top view of the electrode assembly shown in FIG. 15;
FIG. 19 is a schematic structural diagram of an electrode assembly in a battery cell according to some embodiments of this application;
FIG. 20 is a schematic structural diagram of an electrode assembly in a battery cell according to some other embodiments of this application; and
FIG. 21 is a schematic structural diagram of an electrode assembly in a battery cell according to still some other embodiments of this application.

Major reference signs in the figures:
1000. vehicle; 1001. battery; 1002. controller; 1003. motor;
100. box; 101. first part; 102. second part;
200. battery cell;
300. electrode assembly; 30. body portion; 301. first end surface; 302. step; 303. support zone; 304. first side; 305. second side; 31. first electrode plate; 311. insulating substrate; 312. conductive layer; 313. ; 32. second electrode plate; 33. separator; 34. first tab; 341. first tab root portion; 342. first tab body; 35. second tab; 351. second tab root portion; 352. second tab body; 36. auxiliary tab; 361. auxiliary tab root portion; 362. auxiliary tab body; 37. first insulating plate; 38. second insulating plate; 39. protection plate;
40. housing;
41. end cover; 411. lug boss; 412. electrolyte injection hole; 42. housing body; 43. electrode terminal; 431. first electrode terminal; 432. second electrode terminal;
51. current collecting member; 511. first current collecting member; 512. second current collecting member;
52. supporting plate;
X. width direction; Y thickness direction; and Z. height direction.

### DESCRIPTION OF EMBODIMENTS

To make the technical problems to be solved, technical solutions, and beneficial effects of this application more comprehensible, the following describes this application in detail with reference to accompanying drawings and embodiments. It should be understood that the specific embodiments described herein are merely used to explain this application but are not intended to limit this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "include", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. Therefore, a feature limited by "first" or "second" may explicitly or implicitly include one or more features.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment in any suitable manner.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces. "Several" means one or more unless otherwise specifically stated.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of embodiments of this application, unless otherwise expressly specified and limited, when a component is referred to as being "fastened to" or "disposed at" another component, it may be directly fastened to the another component, or may be indirectly fastened to the another component. When a component is referred to as being "connected to" another component, it may be directly connected to the another component, or may be indirectly connected to the another component.

In the description of embodiments of this application, unless otherwise expressly specified and limited, the technical term "adjacent" means being positionally close. For example, where there are three components A₁, A₂, and B, if the distance between A1 and B is greater than the distance between A₂ and B, then A₂ is closer to B compared to A₁. In other words, A₂ is adjacent to B, and it can also be said that B is adjacent to A₂. Similarly, when there are a plurality of components C, and the plurality of components C are denoted as C₁, C₂, ..., and C_{N}, if one of the components C, such as C₂, is closer to component B compared to other components C, then B is adjacent to C₂, and it can also be said that C₂ is adjacent to B.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell. In some cases, the battery cell may also be used directly, that is, the battery may also not include a box, which is not limited herein.

If a plurality of battery cells are provided in a battery, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box; or certainly, the battery may be formed by a plurality of battery cells connected in series, parallel, or series-parallel first to form a battery module and then a plurality of battery modules being connected in series, parallel, or series-parallel to form an entirety which is accommodated in the box. The battery may further include other structures. For example, the battery may further include a busbar configured to implement electrical connection between the plurality of battery cells.

The battery cell in this embodiment of this application includes an electrode assembly and a housing. The electrode assembly is also referred to as a bare battery cell. The electrode assembly includes a positive electrode plate, a negative electrode plate, and a separator. The electrode assembly mainly relies on movement of metal ions between a positive electrode plate and a negative electrode plate to work. The positive electrode plate includes a positive electrode current collector and a positive electrode active substance layer. The positive electrode active substance layer is applied on a surface of the positive electrode current collector. The part of the positive electrode current collector not coated with the positive electrode active substance layer protrudes out of the part of the positive electrode current collector coated with the positive electrode active substance layer. The part not coated with the positive electrode active substance layer serves as a positive electrode tab or a metal conductor is welded to and led out of the positive electrode current collector to serve as the positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of the negative electrode current collector not coated with the negative electrode active substance layer protrudes out of the part of the negative electrode current collector coated with the negative electrode active substance layer. The part not coated with the negative electrode active substance layer serves as a negative electrode tab or a metal conductor is welded to and led out of the negative electrode current collector to serve as the negative electrode tab. The negative electrode current collector may be made of copper, and the negative electrode active substance may be carbon, silicon, or the like. To ensure the ability to withstand a high current without melting, a plurality of positive electrode tabs can be led out of the positive electrode plate and be stacked together to form a single positive electrode tab. Similarly, a plurality of negative electrode tabs can be led out of the negative electrode plate and be stacked together to form a single negative electrode tab. It can be understood that in the electrode assembly, a positive electrode tab can be led out of the positive electrode plate and a negative electrode tab can be led out of the negative electrode plate. Both the positive and negative electrode tabs are referred to as tabs. In other words, the electrode assembly is provided with two tabs having opposite polarities, one is the positive electrode tab and the other is the negative electrode tab. Accordingly, the electrode assembly includes a body portion and tabs. The positive electrode plate, the negative electrode plate, and the separator are stacked and wound to form the body portion of the electrode assembly, and the tabs are led out of the body portion.

The electrode assembly may be a wound structure or a stacked structure. The embodiments of this application are not limited thereto. In a wound structure, the tabs are typically welded onto current collectors and then the parts are arranged in a sequence of positive electrode plate - separator - negative electrode plate - separator and then wound to form a cylindrical or square cell. In a stacked structure, the tabs are typically led out of the current collectors, and the positive electrode, negative electrode, and separator are arranged in a sequence of positive electrode plate - separator - negative electrode plate - separator and then stacked together layer by layer to form a stacked cell, where the separator can be cut off and separator pieces are directly stacked, or it is folded in a Z-shape without being cut off. The separator may be made of PP (polypropylene, polypropylene) or PE (polyethylene, polyethylene). The separator is an insulating film provided between the positive electrode plate and the negative electrode plate. Its main function is to isolate the positive and negative electrodes and prevent electrons in the battery from passing freely so as to avoid a short circuit, while allowing ions in the electrolyte to freely pass between the positive and negative electrodes, thus forming a circuit between the positive and negative electrodes. The positive electrode plate and the negative electrode plate are collectively referred to as electrode plates. The positive electrode tab and negative electrode tab are collectively referred to as tabs.

A housing is a shell structure with an accommodating space inside. The electrode assembly is placed in the accommodating space of the housing so as to be accommodated and protected in the housing.

Current flows in an electrode assembly mainly through tabs to form a circuit to enable charging and discharging of the electrode assembly. The current flow capacity of the tabs of the electrode assembly greatly affects the charging and discharging power of the electrode assembly. However, in some cases, due to limitations in the material and thickness of the tabs, the current flow capacities of the two tabs of the electrode assembly are not equal. This restricts the current flow capacity of the electrode assembly and affects the charging and discharging performance of the battery cell.

Based on the above considerations, to solve the problem that the current flow capacity of a certain tab of the electrode assembly affects the overall current flow capacity of the electrode assembly and the charging and discharging performance of the battery cell, an embodiment of this application provides a battery cell, where a first tab, a second tab, and an auxiliary tab are led out of the body portion of the electrode assembly, both the first tab and the auxiliary tabs are electrically connected to the first electrode terminal, and the second tab is electrically connected to the second electrode terminal. The first tab and the auxiliary tab cooperate to allow the current flowing through the first electrode terminal to pass, enhancing the current flow capacity, and thereby enhancing the overall current flow capacity and the charging and discharging performance of the battery cell.

The battery cell disclosed in the embodiments of this application may be used for electric apparatuses that use a battery as a power source or various energy storage systems that use a battery as an energy storage element, such as an energy storage power system applied to a hydroelectric, thermal, wind, and solar power plant. The electric apparatus may be but is not limited to a mobile phone, a tablet, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus provided in an embodiment of this application being a vehicle is used as an example for description.

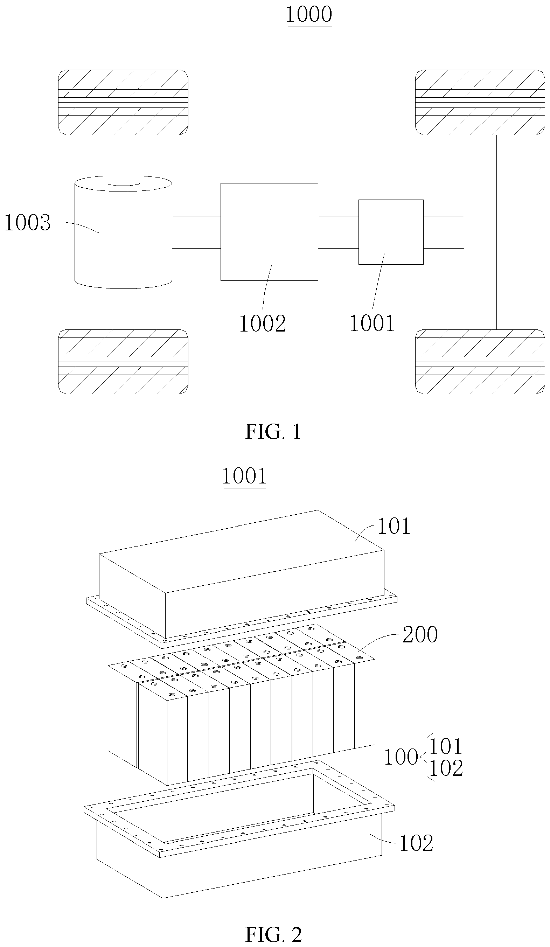

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 1001 inside, and the battery 1001 may be disposed at the bottom, front, or rear of the vehicle 1000. The battery 1001 may be configured to supply power to the vehicle 1000. For example, the battery 1001 may be used as an operational power source for the vehicle 1000. The vehicle 1000 may further include a controller 1002 and a motor 1003, where the controller 1002 is configured to control the battery 1001 to supply power to the motor 1003, for example, to satisfy power needs of start, navigation, and driving of the vehicle 1000.

In some embodiments of this application, the battery 1001 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 1001 according to some embodiments of this application. The battery 1001 includes a box 100 and a battery cell, where the battery cell is accommodated in the box 100. The box 100 is configured to provide an accommodating space for the battery cell, and the box 100 may be of various structures. In some embodiments, the box 100 may include a first part 101 and a second part 102. The first part 101 and the second part 102 fit together so that the first part 101 and the second part 102 jointly define the accommodating space for accommodating the battery cell. The second part 102 may be a hollow structure with one end open, and the first part 101 may be a plate structure, where the first part 101 covers the open side of the second part 102 for the first part 101 and the second part 102 to jointly define an accommodating space; or alternatively, the first part 101 and the second part 102 may both be hollow structures with one side open, where the open side of the first part 101 is engaged with the open side of the second part 102. Certainly, the box 100 formed by the first part 101 and the second part 102 may have a variety of shapes, for example, cylinder or cuboid. The multiple battery cells are connected in parallel, series, or series-parallel, and then put into the box 100 formed after the first part 101 and the second part 102 are snap-fitted.

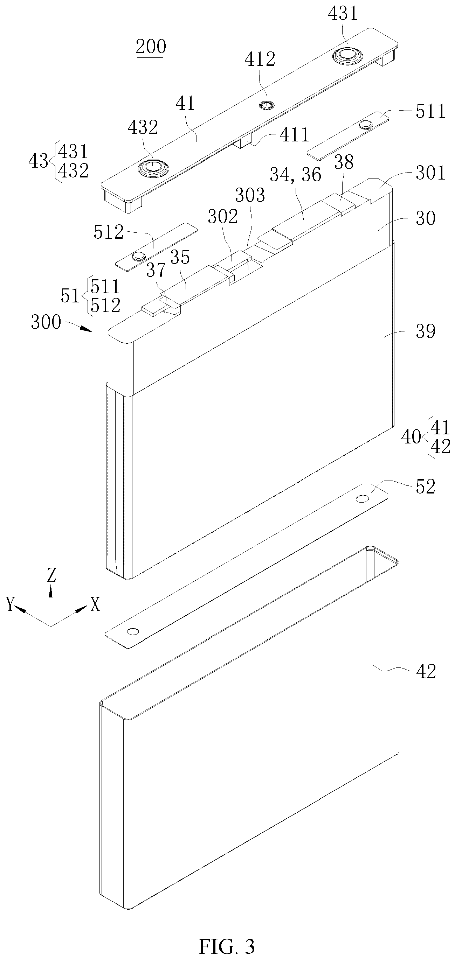

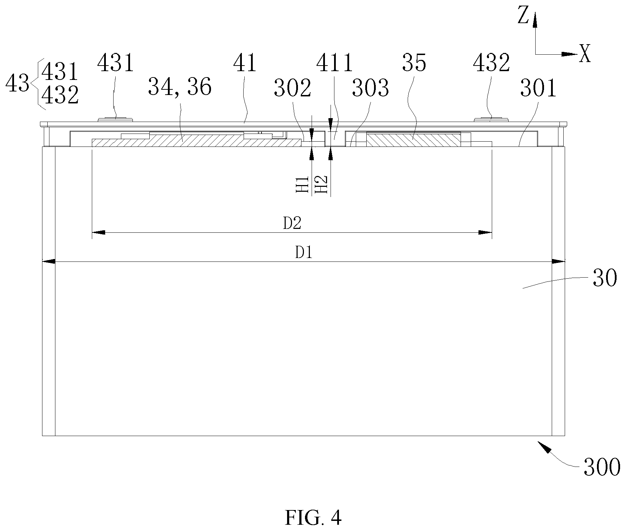

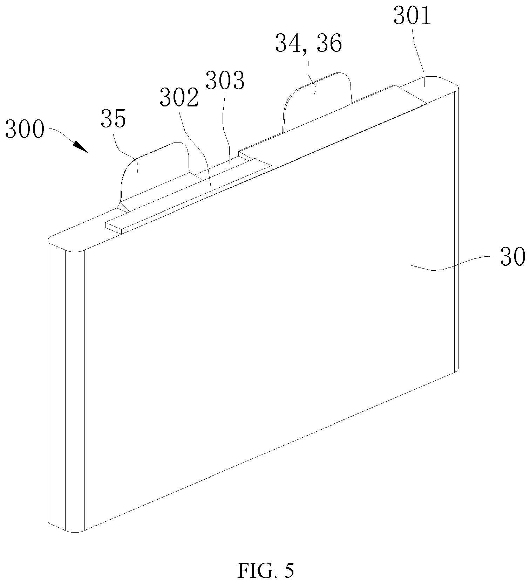

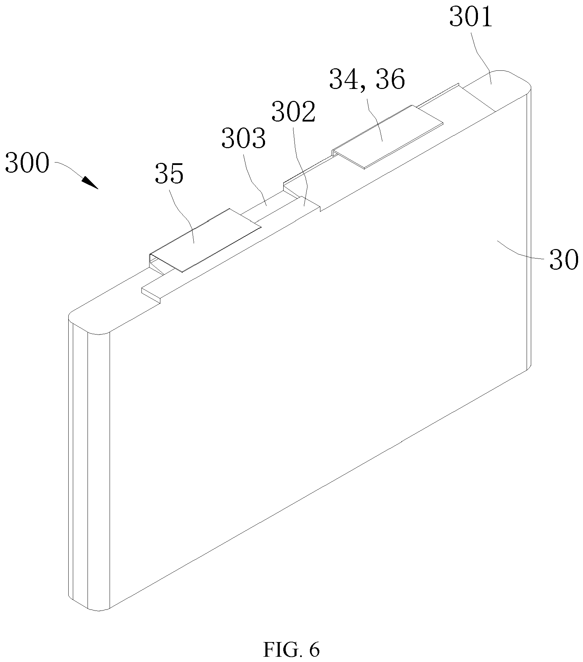

Referring to FIG. 3, FIG. 3 is a schematic structural exploded view of a battery cell 200 according to some embodiments of this application. Referring to FIGs. 4 to 6, FIG. 4 is a schematic structural diagram of a combination of an end cover 41 and an electrode assembly 300 in the battery cell 200 according to some embodiments of this application; FIG. 5 is a schematic structural diagram of the electrode assembly 300 in the battery cell 200 after tabs are stacked according to some embodiments of this application; and FIG. 6 is a schematic structural diagram of the electrode assembly 300 in the battery cell 200 after the tabs are bent according to some embodiments of this application.

The battery cell 200 includes an electrode assembly 300 and an electrode terminal 43, and the electrode assembly 300 includes a body portion 30 and a tab, with the tab leading out of the body portion 30. The electrode terminal 43 is connected to the tab.

The electrode terminal 43 refers to a conductive member connected to the tab of the electrode assembly 300. The electrode terminal 43 is connected to the tab of the electrode assembly 300 to output electrical energy of the battery cell 200 or to charge the battery cell 200. The electrode terminal 43 of the battery cell 200 is typically provided in a quantity of two, and the two electrode terminals 43 are connected to the positive and negative electrode tabs of the electrode assembly 300, respectively. The electrode terminal 43 connected to the positive electrode tab is the positive electrode terminal, and the electrode terminal 43 connected to the negative electrode tab is the negative electrode terminal.

The two tabs having opposite polarities of the electrode assembly 300 may be a first tab 34 and a second tab 35, respectively, where the first tab 34 may be the positive electrode tab and the second tab 35 may be the negative electrode tab. Certainly, the first tab 34 may be the negative electrode tab and the second tab 35 may be the positive electrode tab. Accordingly, the electrode terminal 43 is also provided in a quantity of two. The electrode terminal 43 connected to the first tab 34 may be referred to as the first electrode terminal 43, and the electrode terminal 43 connected to the second tab 35 may be referred to as the second electrode terminal 43.

The tabs of the electrode assembly 300 also include an auxiliary tab 36. In other words, the tabs of the electrode assembly 300 include the first tab 34, the second tab 35, and the auxiliary tab 36. The first tab 34, the second tab 35, and the auxiliary tab 36 are led out of the body portion 30. Both the first tab 34 and the auxiliary tab 36 are electrically connected to the first electrode terminal 43, and the second tab 35 is electrically connected to the second electrode terminal 43. In this way, the first tab 34 cooperates with the auxiliary tab 36 to circulate current, enhancing the current flow capacity of the tab connected to the first electrode terminal 43, and thereby enhancing the overall current flow capacity and performance of the battery cell 200.

Providing the first tab 34, the second tab 35, and the auxiliary tab 36 on the body portion 30 of the electrode assembly 300, electrically connecting both the first tab 34 and the auxiliary tab 36 to the first electrode terminal 43, and electrically connecting the second tab 35 to the second electrode terminal 43 can increase width of the tab electrically connected to the first electrode terminal 43 on the body portion 30 is increased, thereby increasing the current flow area of the tab electrically connected to the first electrode terminal 43 and enhancing the current flow capacity of the tab electrically connected to the first electrode terminal 43.

As shown in FIG. 3, the electrode assembly 300 has a height direction, a width direction, and a thickness direction. In the figure, the Z direction is the height direction of the electrode assembly 300; the X direction is the width direction of the electrode assembly 300; and the Y direction is the thickness direction of the electrode assembly 300. The height direction of the electrode assembly 300 is also the height direction of the body portion 30 thereof; the width direction of the electrode assembly 300 is also the width direction of the body portion 30 thereof; and the thickness direction of the electrode assembly 300 is also the thickness direction of the body portion 30 thereof.

Referring to FIGs. 3 to 6, for ease of description, it is defined that: the side of the body portion 30 of the electrode assembly 300 on which the tabs are led out is defined as the first end surface 301 of the body portion 30. In this way, the body portion 30 has the first end surface 301 and the tabs are led out of the first end surface 301, in other words, the tabs are connected to the body portion 30 through the first end surface 301 of the body portion 30. The first end surface 301 of the body portion 30 is a surface at one end of the height direction (that is, Z direction) of the body portion 30.

In some embodiments, the battery cell 200 further includes a housing 40. The electrode assembly 300 is mounted in the housing 40 for accommodation and protection of the electrode assembly 300 through the housing 40. After the electrode assembly 300 is mounted in the housing 40, an electrolyte is further added to the housing 40 to allow the electrode assembly 300 to absorb the electrolyte.

The housing 40 has a first wall, the first wall being a side wall of the housing 40. The first wall is provided with an electrolyte injection hole for injecting the electrolyte into the housing 40 through the electrolyte injection hole. The first wall is mounted with the electrode terminal 43. The first wall supports the electrode terminal 43. The electrode terminal 43 is electrically connected to the tabs.

In some embodiments, referring to FIGs. 3 and 6, the battery cell 200 further includes a current collecting member 51. The current collecting member 51 is a conductive member connecting the tabs to the electrode terminal 43. The current collecting member 51 may be a conductive plate, a conductive adapter plate, and other structures. The current collecting member 51 connects the tabs to the electrode terminal 43 to facilitate the connection of the tabs to the electrode terminal 43, enabling a more stable connection. It can be understood that in some cases, the tabs may also be directly connected to the electrode terminal 43.

The electrode assembly 300 typically includes a first tab 34, a second tab 35, and an auxiliary tab 36, and the electrode terminal 43 is provided in a quantity of two. Accordingly, the current collecting member 51 is typically provided in a quantity of two. The two current collecting members 51 correspond to the two electrode terminals 43, respectively. Each current collecting member 51 is connected to the corresponding electrode terminal 43, and each current collecting member 51 is connected to the corresponding tab. In other words, each tab is connected to the corresponding electrode terminal 43 through the current collecting member 51 to facilitate the connection between the tab and the electrode terminal 43, enabling a more stable connection. For ease of description, the current collecting member 51 connected to the first electrode terminal 43 is referred to as the first current collecting member 511, and the first tab 34 and the auxiliary tab 36 are connected to the first current collecting member 511; and the current collecting member 51 connected to the second electrode terminal 43 is referred to as the second current collecting member 512, and the second tab 35 is connected to the second current collecting member 512.

In the following description of the embodiments, unless otherwise specified, the term "tab" can refer to the first tab 34, the second tab 35, the auxiliary tab 36, or any combination thereof; similarly, the term "electrode terminal" can refer to the first electrode terminal 43, the second electrode terminal 43, or both; and the term "current collecting member" can refer to the first current collecting member 511, the second current collecting member 512, or both.

In some embodiments, referring to FIG. 3, the housing 40 includes a housing body 42 and an end cover 41, with the end cover 41 covering the housing body 42 to form the housing 40 structure. The electrode assembly 300 is mounted in the housing body 42, and the end cover 41 covers the housing body 42 so that the electrode assembly 300 is mounted in the housing 40.

The end cover 41 is a component that covers an opening of the housing body 42 to isolate the internal environment of the battery cell 200 from an external environment. A shape of the end cover 41 may be adapted to a shape of the housing body 42 to fit and cover the housing body 42. Optionally, the end cover 41 may be made of a material with a specified hardness and strength (for example, aluminum alloy), so that the end cover 41 is less likely to deform when subjected to extrusion and collision, allowing the battery cell 200 to have higher structural strength and enhanced safety performance. The end cover 41 may also be made of various materials, such as copper, iron, aluminum, stainless steel, aluminum alloy, and plastic, which are not particularly limited in the embodiments of this application.

The housing body 42 is an assembly configured to cooperate with the end cover 41 to form an internal environment of the battery cell 200, where the formed internal environment can be configured to accommodate the electrode assembly 300, an electrolyte, and other components. The housing body 42 and the end cover 41 may be separate components, an opening may be provided on the housing body 42, and the end cover 41 covers the opening to form the internal environment of the battery cell 200. The housing body 42 may be of various shapes and sizes, such as a cuboid shape, a cylindrical shape, and a hexagonal prism shape. Specifically, the shape of the housing body 42 may be determined according to a specified shape and size of the battery cell 200. The housing body 42 may be made of various materials, such as copper, iron, aluminum, stainless steel, aluminum alloy, and plastic, which are not particularly limited in the embodiments of this application.

In some embodiments, the end cover 41 may further be provided with a pressure relief mechanism for releasing internal pressure when the internal pressure or a temperature of the battery cell 200 reaches a threshold.

In some embodiments, the battery cell 200 further includes a supporting plate 52, where the supporting plate 52 is mounted in the housing body 42 and can support the bottom of the body portion 30 of the electrode assembly 300, increasing the structural strength of the battery cell 200.

In some embodiments, referring to FIGs. 3 to 5, the end cover 41 is provided with an electrolyte injection hole 412 and an electrode terminal 43. In other words, the end cover 41 is the first wall of the housing 40. This facilitates the processing of the electrolyte injection hole 412 and the mounting of the electrode terminal 43 on the housing 40. It should be understood that one of the other side walls of the housing 40 can also be used as the first wall, for example, the bottom of the housing body 42 of the housing 40 can be used as the first wall, and the electrolyte injection hole 412 and the electrode terminal 43 can be mounted on the bottom of the housing body 42.

Using the end cover 41 as the first wall of the housing 40 involves a relatively simple manufacturing process, and this facilitates the mounting of the electrode terminal 43, as well as the connection of the tabs to the electrode terminal 43. Therefore, the following embodiments provide a detailed description with the end cover 41 being used as the first wall of the housing 40 as an example. When the end cover 41 is used as the first wall of the housing 40, the electrolyte injection hole 412 is provided on the end cover 41, the electrode terminal 43 is mounted on the end cover 41, the side of the tab away from the end cover 41 is the first side, and the side of the tab close to the end cover 41 is the second side.

The current flow area of the tab is the product of width of the tab and thickness of the tab. The current flow area of the first tab 34 is the product of width of the first tab 34 and thickness of the first tab 34. The current flow area of the auxiliary tab 36 is the product of width of the auxiliary tab 36 and thickness of the auxiliary tab 36. The current flow area of the second tab 35 is the product of width of the second tab 35 and thickness of the second tab 35.

In some embodiments, a sum of the current flow areas of the first tab 34 and the auxiliary tab 36 is greater than or equal to the current flow area of the second tab 35. When a constant current passes through a unit area of the tab connected to the first electrode terminal 43, a larger current flow area results in a greater overall current flow capacity thereof. Therefore, the sum of the current flow areas of the first tab 34 and the auxiliary tab 36 is configured to a large value. This enables a large current flow area of the tab connected to the first electrode terminal 43, thereby enhancing the current flow capacity of the tab electrically connected to the first electrode terminal 43. In particular, when on a unit area, the current flow capacity of the first tab 34 is weaker than the current flow capacity of the second tab 35, configuring the sum of the current flow areas of the first tab 34 and the auxiliary tab 36 to be greater than or equal to the current flow area of the second tab 35 can increase the overall current flow capacity of the first tab 34 and the auxiliary tab 36, so that the overall current flow capacity of the first tab 34 and the auxiliary tab 36 is closer to the current flow capacity of the second tab 35, thereby enhancing the current flow capacity of the battery cell 200.

In some embodiments, the first tab 34 is located at one end of the body portion 30 in a width direction X of the body portion, and an end of the auxiliary tab 36 away from the first tab 34 extends beyond the middle of the body portion 30 in the width direction X of the body portion. In this way, the auxiliary tab 36 is provided at a side of the first tab 34 close to an end of the body portion 30 in the width direction of the body portion to facilitate design and manufacturing. The auxiliary tab 36 extending beyond the middle of the body portion 30 along the width direction X of the body portion allows for a sufficient width on the body portion 30 for the design of the auxiliary tab 36, thereby increasing the current flow capacity of the tab connected to the first electrode terminal 43.

In some embodiments, referring to FIGs. 3 to 5, in the width direction X of the body portion 30, a ratio of a sum of lengths of the auxiliary tab 36 and the first tab 34 to width of the body portion 30 ranges from 0.5 to 1. That is, the sum of widths of the first tab 34 and the auxiliary tab 36 may be greater than or equal to half of width of the body portion 30; if the sum of widths of the first tab 34 and the auxiliary tab 36 is D2, and width of the body portion 30 is D1, then 0.5 ≤ D2/D1 ≤ 1, so that the tab electrically connected to the first electrode terminal 43 has a large width and therefore a large current flow area, thereby enhancing the current flow capacity of the tab electrically connected to the first electrode terminal 43.

In some embodiments, the electrical conductivity of the first tab 34 is less than the electrical conductivity of the second tab 35. Due to the difference in material between the first tab 34 and the second tab 35, the first tab 34 and the second tab 35 may have different electrical conductivities. When the electrical conductivity of the first tab 34 is lower than the electrical conductivity of the second tab 35, the current flow capacity per unit area of the first tab 34 is less than the current flow capacity per unit area of the first tab 34. However, the first tab 34 and the auxiliary tab 36 are both connected to the first electrode terminal 43, so that the sum of the current flow capacities of the first tab 34 and the auxiliary tab 36 is substantially the same as the current flow capacity of the second tab 35. As a result, the overall current flow capacity of the battery cell 200 and the performance of the battery cell 200 are enhanced.

In some embodiments, when the battery cell 200 includes a first current collecting member 511 and a second current collecting member 512, the first current collecting member 511 connects the first tab 34 and the auxiliary tab 36 to the first electrode terminal 43, and the second current collecting member 512 connects the second tab 35 to the second electrode terminal 43. The first current collecting member 511 is provided for ease of connection of the first tab 34 and the auxiliary tab 36 to the first electrode terminal 43; and the second current collecting member 512 is provided for ease of connection of the second tab 35 to the second electrode terminal 43, facilitating assembly.

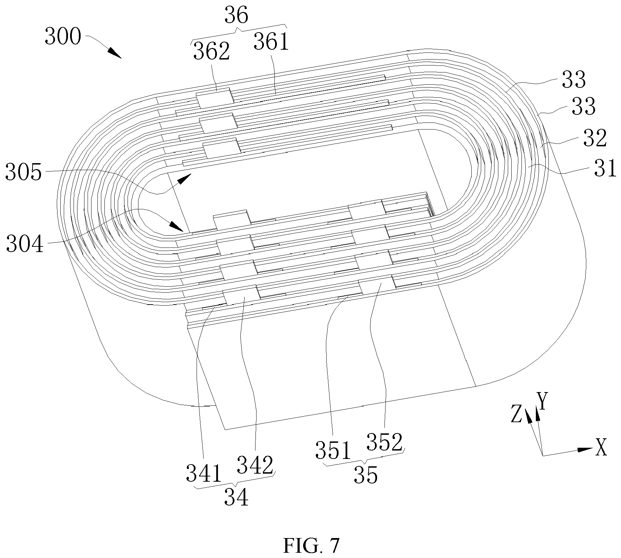

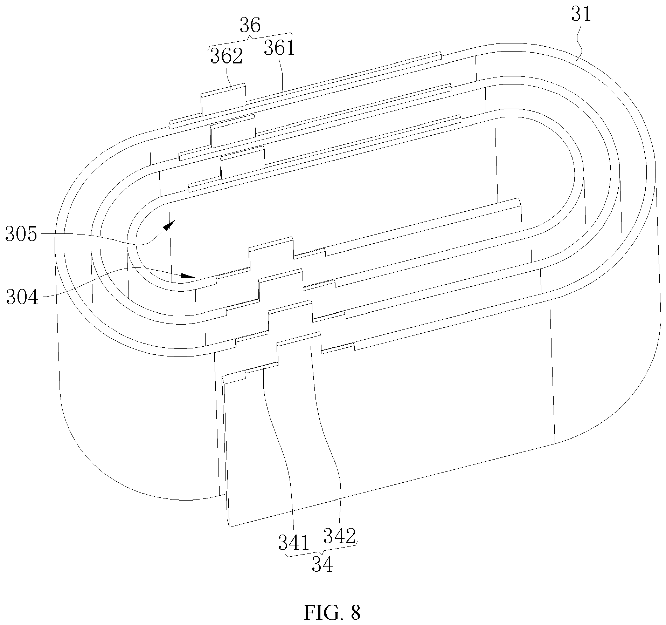

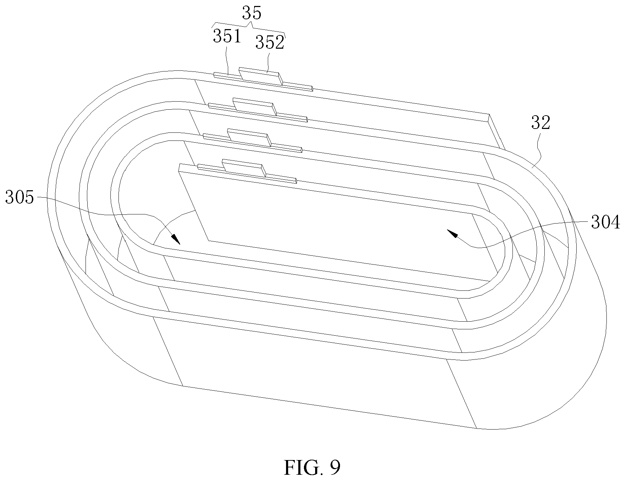

Referring to FIGs. 7 to 9, FIG. 7 is a schematic structural diagram of an electrode assembly 300 according to some embodiments of this application. FIG. 8 is a schematic structural diagram of a first electrode plate 31 of an electrode assembly 300 according to some embodiments of this application. FIG. 9 is a schematic structural diagram of a second electrode plate 32 of an electrode assembly 300 according to some embodiments of this application.

The electrode assembly 300 shown in FIG. 7 is of a wound structure including a first electrode plate 31, a second electrode plate 32, and a separator 33, where the first electrode plate 31 is provided with a first tab 34 and an auxiliary tab 36, and the second electrode plate 32 is provided with a second tab 35. Referring to FIG. 6, the first electrode plate 31, the second electrode plate 32, and the separator 33 are wound to form the body portion 30 of the electrode assembly 300. The separator 33 is located between the first electrode plate 31 and the second electrode plate 32. The first electrode plate 31 may be a positive electrode plate and the second electrode plate 32 may be a negative electrode plate. Certainly, the first electrode plate 31 may be a negative electrode plate and correspondingly, the second electrode plate 32 may be a positive electrode plate.

In some embodiments, the first tab 34 includes a first tab root portion 341 and a first tab body 342, where the first tab body 342 is connected to the first tab root portion 341, the first tab root portion 341 is connected to the body portion 30, and the first tab body 342 leads out of the first tab root portion 341. The first tab body 342 is electrically connected to the first electrode terminal 43 during use. Width of the first tab root portion 341 is greater than width of the first tab body 342. This can improve the current conducting capability of the first tab 34, allowing for a thinner first tab 34 and reducing the space occupation. Additionally, this also improves the structural strength at the connection between the first tab root portion 341 and the body portion 30. In other words, this enhances the structural strength of the end surface where the first tab 34 is led out of the body portion 30. The first tab body 342 is provided for ease of connection to the first electrode terminal 43, facilitating assembly and connection.

In some embodiments, the second tab 35 includes a second tab root portion 351 and a second tab body 352, where the second tab body 352 is connected to the second tab root portion 351, the second tab root portion 351 is connected to the body portion 30, and the second tab body 352 leads out of the second tab root portion 351. The second tab body 352 is electrically connected to the second electrode terminal 43 during use. Width of the second tab root portion 351 is greater than width of the second tab body 352. This can improve the current conducting capability of the second tab 35, allowing for a thinner second tab 35 and reducing the space occupation. Additionally, this also improves the structural strength at the connection between the second tab root portion 351 and the body portion 30. In other words, this enhances the structural strength of the end surface where the second tab 35 is led out of the body portion 30. The second tab body 352 is provided for ease of connection to the second electrode terminal 43, facilitating assembly and connection.

In some embodiments, the auxiliary tab 36 includes an auxiliary tab root portion 361 and an auxiliary tab body 362, where the auxiliary tab body 362 is connected to the auxiliary tab root portion 361, the auxiliary tab root portion 361 is connected to the body portion 30, and the auxiliary tab body 362 leads out of the auxiliary tab root portion 361. The auxiliary tab body 362 is electrically connected to the first electrode terminal 43 during use. Width of the auxiliary tab root portion 361 is greater than width of the auxiliary tab body 362. This can improve the current conducting capability of the auxiliary tab 36, allowing for a thinner auxiliary tab 36 and reducing the space occupation. Additionally, this also improves the structural strength at the connection between the auxiliary tab root portion 361 and the body portion 30. In other words, this enhances the structural strength of the end surface where the auxiliary tab 36 is led out of the body portion 30. The auxiliary tab body 362 is provided for ease of connection to the first electrode terminal 43, facilitating assembly and connection.

In some embodiments, the auxiliary tab 36 may include only the auxiliary tab root portion 361, where the auxiliary tab root portion 361 is connected to the first tab root portion 341. In this way, the auxiliary tab root portion 361 is connected to the first electrode terminal 43 via the first tab root portion 341 and the first tab body 342. This reduces the material usage and facilitates the connection to the first electrode terminal 43 and assembly.

In some embodiments, in the thickness direction Y of the body portion 30, the auxiliary tab root portion 361 has an overlapping area with the second tab 35. Making the auxiliary tab root portion 361 have an overlapping area with the second tab 35 allows for a sufficient width on the body portion 30 for the design of the auxiliary tab 36, which enables the provision of a wider auxiliary tab 36 to increase the current flow area of the auxiliary tab 36 and increase its current flow capacity.

In some embodiments, when the auxiliary tab root portion 361 has an overlapping area with the second tab 35, an insulating structure is provided between the auxiliary tab root portion 361 and the second tab 35. Providing the insulating structure ensures good insulation between the auxiliary tab root portion 361 and the second tab 35, avoiding a short circuit between the auxiliary tab root portion 361 and the second tab 35.

In some embodiments, the auxiliary tab 36 is led out of the first electrode plate 31, the second tab 35 is led out of the second electrode plate 32, and a separator 33 is provided between the first electrode plate 31 and the second electrode plate 32, so that the separator 33 can extend to between the auxiliary tab 36 and the second tab 35 to provide an effective insulating and protection between the auxiliary tab 36 and the second tab 35.

In some embodiments, in the height direction Z of the body portion 30, the auxiliary tab root portion 361 is level with the second tab root portion 351; and the separator 33 of the body portion 30 extends to between the auxiliary tab root portion 361 and the second tab root portion 351 to form an insulating structure. The auxiliary tab root portion 361 is level with the second tab root portion 351, so that the overlapping area of the auxiliary tab root portion 361 and the second tab root portion 351 forms a flat surface during lamination of the electrode assembly 300, especially when the second tabs 35 are stacked and pressed together as a whole. In this case, the portion of the separator 33 that extends to between the auxiliary tab root portion 361 and the second tab root portion 351 isolates the auxiliary tab root portion 361 from the second tab root portion 351, providing an insulation and protection function. Such structure is simple to manufacture and process.

In some embodiments, in the height direction Z of the body portion 30, height of the auxiliary tab root portion 361 is greater than height of the second tab root portion 351. Making height of the auxiliary tab root portion 361 be greater than height of the second tab root portion 351 is conducive to the provision of the auxiliary tab root portion 361 and can reduce the internal resistance of the auxiliary tab 36 and increase the current flow capacity of the auxiliary tab root portion 361. In addition, this also facilitates the provision of an insulating structure between the auxiliary tab root portion 361 and the second tab root portion 351.

In some embodiments, the separator 33 of the body portion 30 protrudes out of the auxiliary tab root portion 361 in the height direction Z of the body portion 30, so that when the electrode assembly 300 is laminated, especially when the second tabs 35 are stacked and pressed together as a whole, the separator 33 can cover the auxiliary tab root portion 361, better isolating the auxiliary tab root portion 361 from the second tab root portion 351 and the second tab body 352 to provide a more effective insulation and protection function. Thus, the portion of the separator 33 protruding out of the second tab root portion 351 forms an insulating structure between the auxiliary tab root portion 361 and the second tab 35.

In some embodiments, height by which the separator 33 projecting out of the auxiliary tab root portion 361 is greater than or equal to 2 mm. Configuring the separator 33 of the body portion 30 to protrude more than 2 millimeters (mm) from the auxiliary tab root portion 361 allows the separator 33 to cover the auxiliary tab root portion 361 when the second tab bodies 352 are stacked and pressed together, ensuring effective insulation and protection between the auxiliary tab root portion 361 and the second tab 35.

In some embodiments, an insulating adhesive can be provided on the auxiliary tab root portion 361, so that the insulating adhesive can provide insulation and protection to the auxiliary tab root portion 361 to prevent a short circuit between the auxiliary tab root portion 361 and the second tab 35. This design of a structure that uses the insulating adhesive as the insulating structure is easy to assemble, has a simple structure, and ensures effective insulation.

In some embodiments, an insulating adhesive can be provided on the second tab 35, so that the insulating adhesive can provide insulation and protection to the second tab 35 to prevent a short circuit between the auxiliary tab root portion 361 and the second tab 35. This design of a structure that uses the insulating adhesive as the insulating structure is easy to assemble, has a simple structure, and ensures effective insulation.

In some embodiments, the insulating adhesive may be provided on both the auxiliary tab root portion 361 and the second tab 35 to prevent a short circuit between the auxiliary tab root portion 361 and the second tab 35, ensuring a better insulation effect.

An insulating adhesive refers to a film or tape having insulating properties.

In some embodiments, referring to FIGs. 5, 6, and 7, a first insulating plate 37 is affixed to a side of the second tab 35 close to the auxiliary tab 36. The second tabs 35 need to be pressed together, so that after a second tab is bent and connected with the second electrode terminal 43, the first insulating plate 37 affixed on the side of the second tab 35 close to the auxiliary tab 36 provides an effective insulation and protection function. In addition, it can also protect the second tab 35, and prevent burrs produced in the welding of the second tab 35 with the second electrode terminal 43 from affecting the auxiliary tab 36.

In some embodiments, referring to FIGs. 5, 6, and 7, a second insulating plate 38 is affixed to the side of the first tab 34 away from the first electrode terminal 43. This can protect the first tab 34, and prevent burrs produced in the welding of the first tab 34 with the first electrode terminal 43 from affecting the body portion 30.

In some embodiments, referring to FIGs. 7 to 9, in the multi-turn electrode plate formed by winding: for each turn, the two sides of the width direction X of the electrode assembly 300 are a first side and a second side, respectively; in each turn, the first electrode plate 31 has a first tab 34 leading out at the first side, the first electrode plate 31 has an auxiliary tab 36 leading out at the second side, and the second electrode plate 32 has a second tab 35 leading out at the first side; each first tab 34 and each second tab 35 are staggered in the width direction X of the electrode assembly 300; a plurality of first tabs 34 are stacked to form an entire first tab 34, a plurality of auxiliary tabs 36 are stacked to form an entire auxiliary tab 36, and a plurality of second tabs 35 are stacked to form an entire second tab 35. This design of a structure is simple and is conducive to the design and installation of the first tab 34, the second tab 35, and the auxiliary tab 36.

Certainly, in some embodiments, the first tab 34 and the auxiliary tab 36 can also be led out of the first side of the first electrode plate 31.

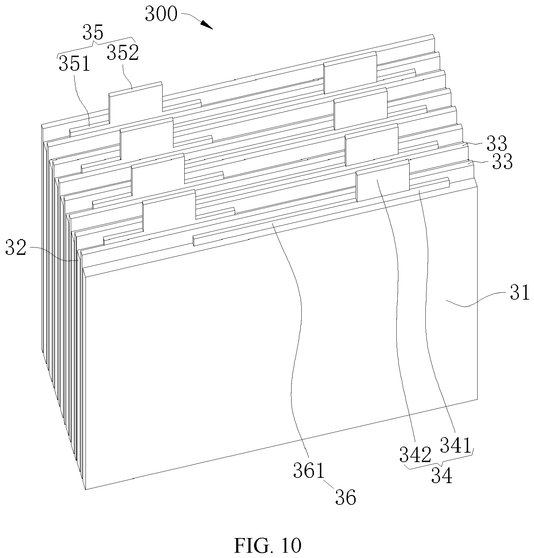

In some embodiments, referring to FIG. 10, FIG. 10 is a schematic structural diagram of an electrode assembly 300 according to some embodiments of this application. The electrode assembly 300 shown in FIG. 10 is of a stacked structure. The components are arranged in a sequence of first electrode plate 31 - separator 33 - second electrode plate 32 - separator 33, and are stacked together layer by layer to form a stacked electrode assembly 300.

In some embodiments, the first tab 34 is integrally formed with the auxiliary tab 36. This allows the first tab 34 and the auxiliary tab 36 to form a larger piece of tab for ease of manufacturing.

In some embodiments, an auxiliary tab 36 may be provided on each first electrode plate 31 to increase the overall current flow capacity of the tabs on each first electrode plate 31.

In some embodiments, when the first tab 34 and the auxiliary tab 36 are integrally formed, the auxiliary tab 36 may include only the auxiliary electrode root portion 361. This simplifies the structure, and only the first tab 34 needs to be connected to the first electrode terminal 43 to achieve the connection of both the first tab 34 and the auxiliary tab 36 to the first electrode terminal 43, facilitating the connection.

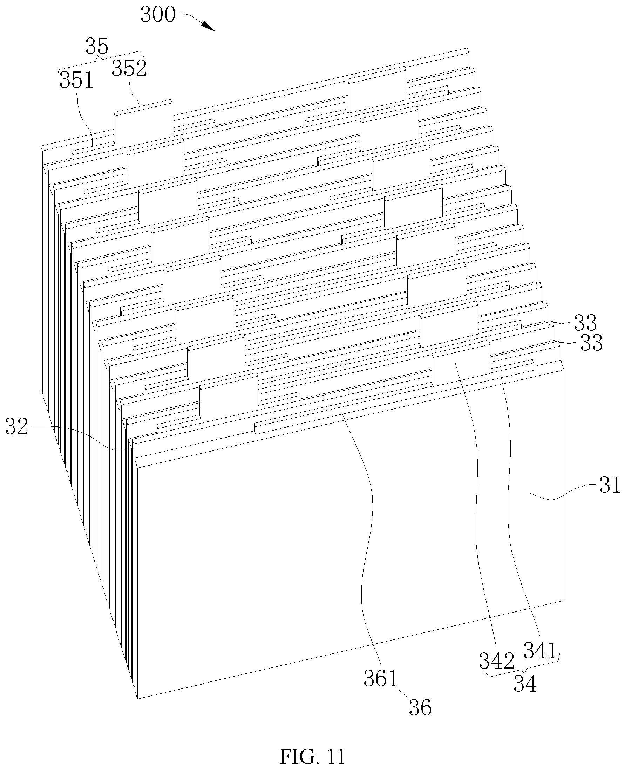

Referring to FIG 11, FIG. 11 is a schematic structural diagram of an electrode assembly 300 according to some embodiments of this application.

In some embodiments, the auxiliary tab 36 may be provided on certain first electrode plates 31. This may increase the current flow capacity of the tab connected to the first electrode terminal 43 to some extent.

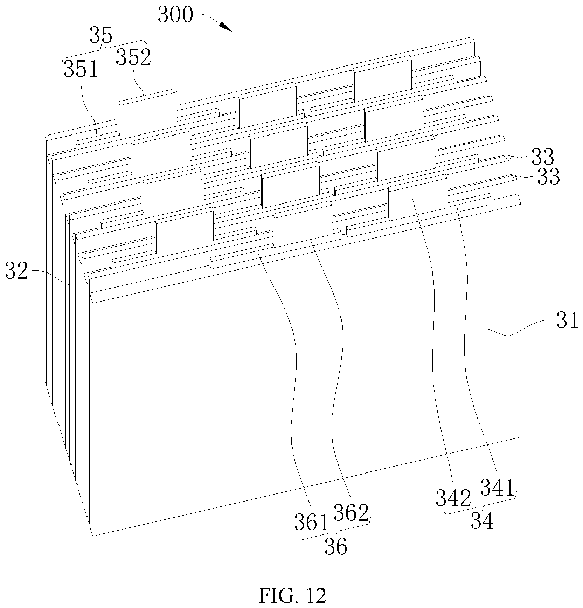

Referring to FIG 12, FIG. 12 is a schematic structural diagram of an electrode assembly 300 according to some embodiments of this application.

In some embodiments, the first tab 34 and the auxiliary tab 36 are provided as separate parts. This allows for convenient positioning of the auxiliary tab 36, and also facilitates the provision of an insulating structure between the auxiliary tab 36 and the second tab 35.

In some embodiments, the first tab 34 and the auxiliary tab 36 are spaced apart. In other words, the first tab 34 and the auxiliary tab 36 are separated. This facilitates the distinction between the first tab 34 and the auxiliary tab 36, making it easier to individually connect the first tab 34 and the auxiliary tab 36 to the first electrode terminal 43.

In some embodiments, when the first tab 34 is spaced apart from the auxiliary tab 36, the auxiliary tab 36 includes the auxiliary tab root portion 361 and an auxiliary tab body 362, the auxiliary tab root portion 361 is connected to the body portion 30, and the auxiliary tab body 362 protrudes out of the body portion 30 and is electrically connected to the first electrode terminal 43.

In some embodiments, when the first tab 34 and the auxiliary tab 36 are provided separately, the first tab 34 can be connected to the auxiliary tab 36, so that when connecting to the first electrode terminal 43, only one of the first tab 34 and the auxiliary tab 36 need to be connected to the first electrode terminal 43 to realize that both the first tab 34 and the auxiliary tab 36 are electrically connected to the first electrode terminal 43, facilitating the assemble.

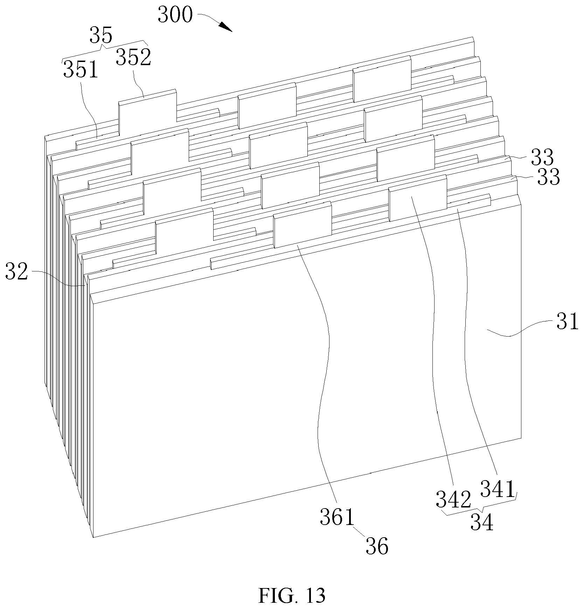

Referring to FIG 13, FIG. 13 is a schematic structural diagram of an electrode assembly 300 according to some embodiments of this application.

In some embodiments, the first tab 34 and the auxiliary tab 36 are integrally formed, and the auxiliary tab 36 includes an auxiliary tab root portion 361 and an auxiliary tab body 362. The auxiliary tab body 362 is connected to the auxiliary tab root portion 361, and the auxiliary tab body 362 is electrically connected to the first electrode terminal 43. The first tab body 342 of the first tab 34 is also electrically connected to the first electrode terminal 43 to increase the connection area with the first electrode terminal 43 and reduce the internal resistance. In addition, the current passing through the first electrode terminal 43 is divided between the first tab body 342 and the auxiliary tab body 362 to increase the overall current flow capacity.

In some embodiments, referring to FIG. 6 and FIG. 11, when an auxiliary tab 36 is provided on certain first electrode plates 31, a region of the body portion 30 at the auxiliary tab root portion 361 protrudes out of the first end surface 301 to form a step 302, a support zone 303 is formed in the middle of the first end surface 301 in the width direction X of the first end surface, and the support zone 303 is located at a side of the step 302.

In some embodiments, referring to FIGs. 6 to 9, when the first electrode plate 31 has a first tab 34 leading out at the first side and the first electrode plate 31 has an auxiliary tab 36 leading out at the second side, the region of the body portion 30 at the auxiliary tab root portion 361 protrudes out of the first end surface 301 to form a step 302, a support zone 303 is formed in the middle of the first end surface 301 in the width direction X of the first end surface, and the support zone 303 is located at a side of the step 302.

In some embodiments, referring to FIGs. 3 and 4, the battery cell 200 further includes an end cover 41, where the end cover 41 is provided with a lug boss 411. When the end cover 41 is mounted for use, for example, when the end cover 41 is mounted on the housing body 42, the lug boss 411 on the end cover 41 resists against the support zone 303 so that the support zone 303 on the body portion 30 supports the lug boss 411, providing a stable support to the end cover 41. This enhances the structural strength of the battery cell 200.

In some embodiments, height H2 of the lug boss 411 is greater than height H1 of the step 302, so that when the lug boss 411 of the end cover 41 resists against the support zone 303, this can prevent the end cover 41 from squeezing the step 302, thereby providing protection for the auxiliary tab root portion 361.

In some embodiments, height H2 of the lug boss 411 is at least 2 mm greater than height H1 of the step 302, that is, H2 - H1 ≥ 2 mm. This structural configuration can prevent the end cover 41 from squeezing the step 302, protecting the auxiliary tab root portion 361.

In some embodiments, referring to FIGs. 3 and 4, in the thickness direction Y of the body portion 30, width of each of the lug bosses 411 is less than width of the support zone 303, and width of the lug boss 411 is greater than 2 mm. Width of the lug boss 411 being smaller than width of the support zone 303 allows the support zone 303 to support the lug boss 411 well; and width of the lug boss 411 being greater than 2 mm can ensure the structural strength of the lug boss 411.

In some embodiments, thickness of the first tab 34 is less than thickness of the second tab 35. This makes the current flow capacity of the first tab 34 to be less than the current flow capacity of the second tab 35. However, the first tab 34 and the auxiliary tab 36 are both connected to the first electrode terminal 43, so that the sum of the current flow capacities of the first tab 34 and the auxiliary tab 36 is substantially the same as the current flow capacity of the second tab 35. As a result, the overall current flow capacity of the battery cell 200 is ensured.

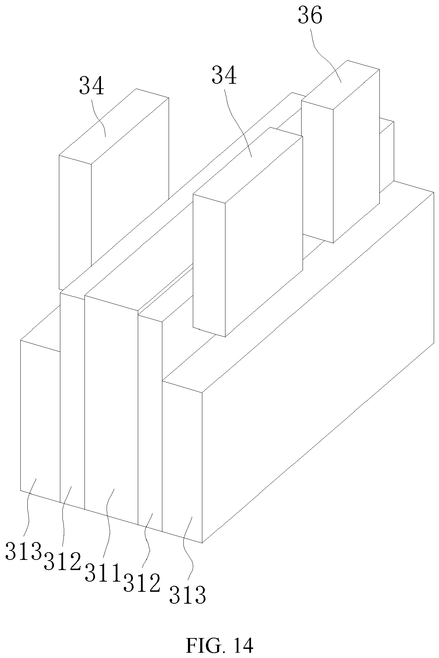

Referring to FIG 14, FIG. 14 is a schematic structural diagram of an electrode assembly 300 according to some embodiments of this application.

The first electrode plate 31 includes an insulating substrate 313 and a conductive layer 312. The insulating substrate 313 is provided with the conductive layer 312 on each of the two sides. The insulating substrate 313 refers to a film layer made of an insulating material. The insulating substrate 313 may be made of PP (Polypropylene) or PE (Polyethylene), and the like. The conductive layer 312 refers to the collector of the first electrode plate 31. The conductive layer 312 is provided with an active substance layer 313 to form the electrode plate. When the first electrode plate 31 is a positive electrode plate, the conductive layer 312 is a positive electrode current collector, and the active substance layer 313 is a positive electrode active substance layer. When the first electrode plate 31 is a negative electrode plate, the conductive layer 312 is a negative electrode current collector, and the active substance layer 313 is a negative electrode active substance layer. A first tab 34 leads out of each of the conductive layers 312. An auxiliary tab 36 leads out of one or each of the two conductive layers 312. In other words, an auxiliary tab 36 leads out of at least one of the conductive layers 312. Providing an insulating substrate 313 between the two conductive layers 312 allows thicknesses of the two conductive layers 312 to be smaller, so that when the first electrode plate 31 is being cut, or when a foreign object pierces the first electrode plate 31, the burrs produced on the conductive layers 312 are small and can hardly pierce the insulating substrate 313, thereby reducing the risk of a short circuit and improving the safety performance. Furthermore, in this structural configuration, the provision of the insulating substrate 313 between the two conductive layers 312 results in a reduction in thickness of the conductive layers 312 when thickness of the first electrode plate 31 is fixed. Consequently, thickness of the first tab 34 on the first electrode plate 31 also needs to be reduced in manufacturing. This results in a decrease in the current flow area of the first tab 34. However, when an auxiliary tab 36 leads out of at least one of the conductive layers 312, the current flow area of the tab on the first electrode plate 31 is the sum of the current flow areas of the first tab 34 and the auxiliary tab 36. This increases the current flow area of the tab on the first electrode plate 31, thereby enhancing the current flow capacity of the tab on the first electrode plate 31.

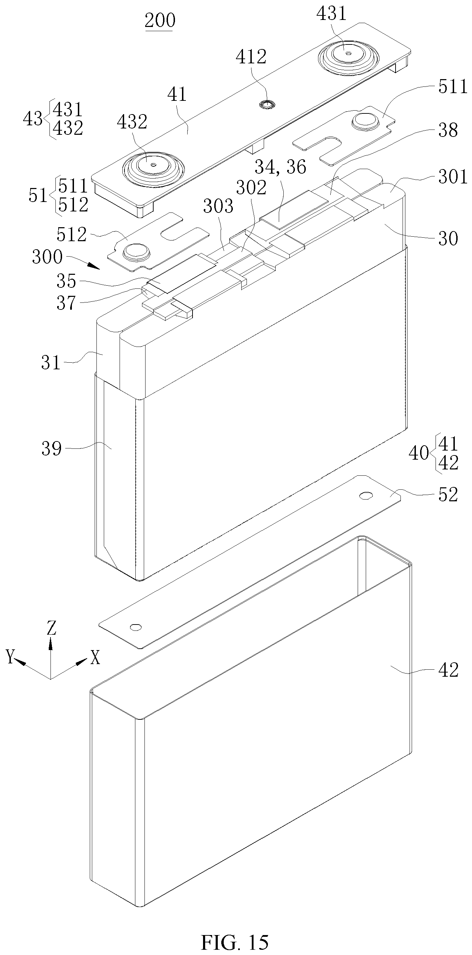

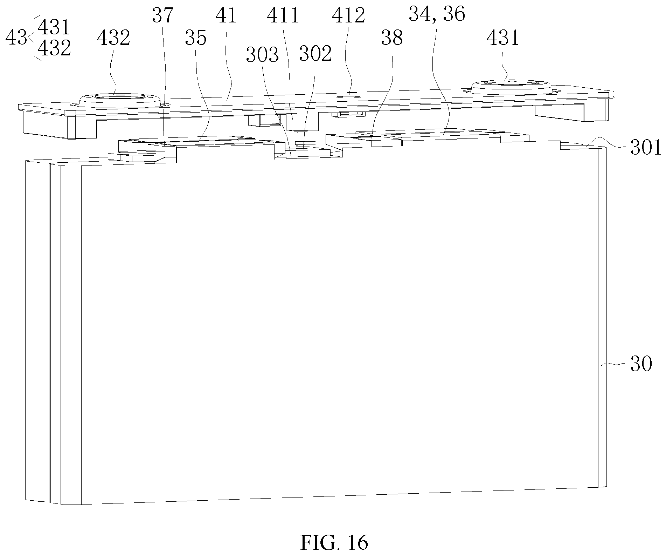

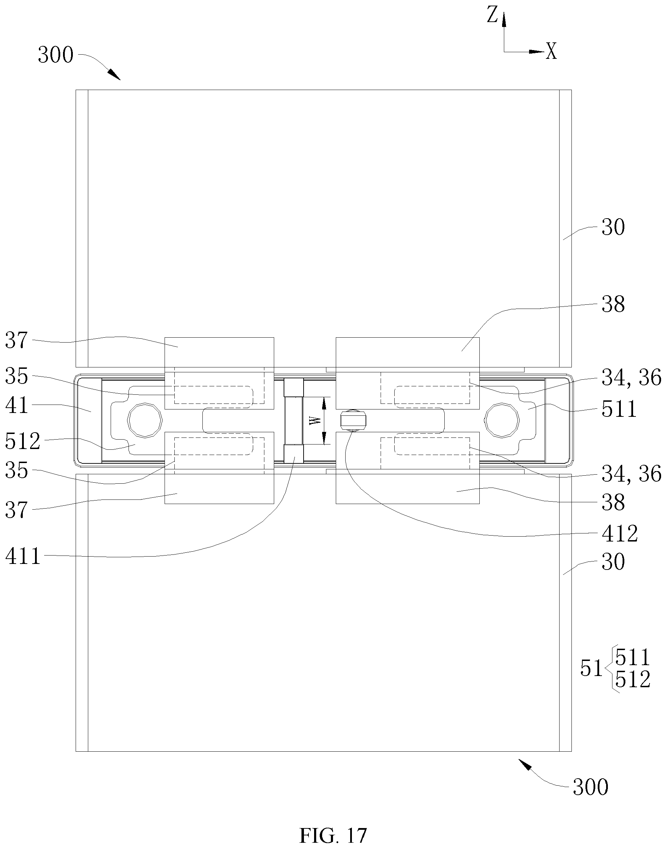

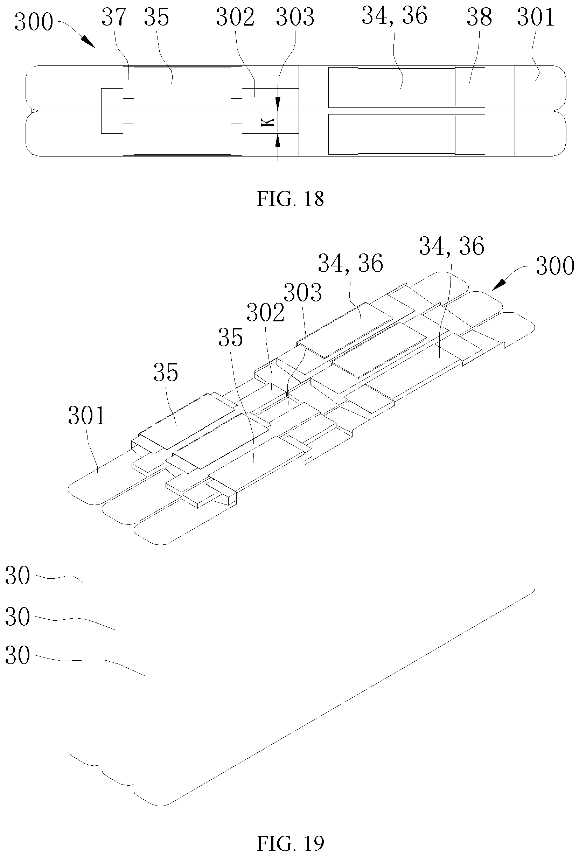

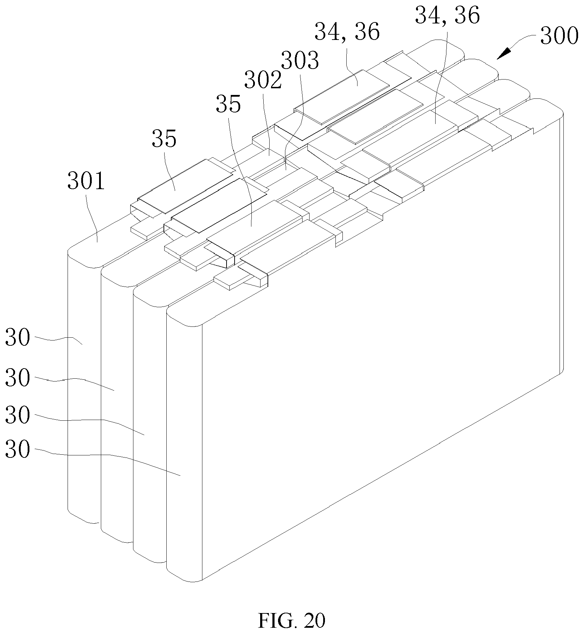

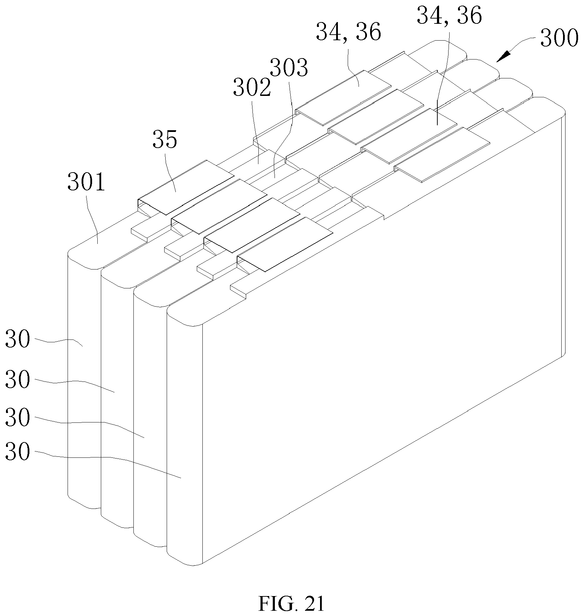

Referring to FIGs. 15 to 21, FIG. 15 is a schematic structural exploded view of a battery cell 200 according to some embodiments of this application. FIG. 16 is a schematic structural diagram of a combination of the end cover 41 and the electrode assembly 300 according to some embodiments of this application. FIG. 17 is a schematic structural diagram of an electrode assembly 300 unfolding relative to an end cover 41 according to some embodiments of this application. FIG. 18 is a schematic structural top view of an electrode assembly 300 according to some embodiments of this application. FIG. 19 is a schematic structural diagram of an electrode assembly 300 in a battery cell 200 according to some embodiments of this application; FIG. 20 is a schematic structural diagram of an electrode assembly 300 in a battery cell 200 according to some other embodiments of this application; FIG. 21 is a schematic structural diagram of an electrode assembly 300 in a battery cell 200 according to still some other embodiments of this application;

In some embodiments, referring to FIG. 3, 16, and 19, the battery cell 200 may include one or more electrode assemblies 300. When the battery cell 200 includes a plurality of electrode assemblies 300, the plurality of electrode assemblies 300 are divided into two groups, each group including at least one electrode assembly 300. For example, when the electrode assemblies 300 are provided in a quantity of two, the two electrode assemblies 300 are divided into two groups. However, when the number of the electrode assemblies 300 is greater than two, at least one group includes at least two electrode assemblies 300, while the other group includes at least one electrode assembly 300. When the number of electrode assemblies 300 is an even number, the number of electrode assemblies 300 in the two groups may be set to be the same.

In some embodiments, referring to FIGs. 3 and 15, an electrode assembly 300 further includes a protection plate 39, the protection plate 39 wrapping around the body portion 30 to bind the body portion 30 of the electrode assembly 300 and well protect the body portion 30.

In some embodiments, referring to FIG. 15, the battery cell 200 includes two electrode assemblies 300, where the protection plate 39 wraps around the body portions 30 of the two electrode assemblies 300 to bind the body portions 30 of the two electrode assemblies 300. This is conducive to installation and can provide good protection to the body portions 30 of the two electrode assemblies 300. It should be understood that the protection plate 39 can be wrapped around each of the body portions 30 separately. Certainly, when the battery cell 200 includes a greater number of electrode assemblies 300, the body portions 30 of the plurality of electrode assemblies 300 may be wrapped together to facilitate assembly.

In some embodiments, the battery cell 200 includes two electrode assemblies 300, and the two electrode assemblies 300 are divided into two groups, with each group having one electrode assembly. When the battery cells 200 are provided in a greater number, the electrode assemblies can also be divided into two groups, with each group having one or more electrode assemblies 300. Providing a plurality of electrode assemblies 300 can increase the capacity density of the battery cell 200, and also facilitates the processing and manufacturing of the electrode assemblies 300.

In some embodiments, the battery cell 200 includes a plurality of electrode assemblies 300, where the plurality of electrode assemblies 300 are divided into two groups, the two groups of electrode assemblies 300 being opposite each other. Stacking the plurality of electrode assemblies 300 can increase the capacity of the battery cell 200; and dividing the plurality of electrode assemblies 300 into two groups and disposing the two groups of electrode assemblies 300 opposite each other allow the tabs of the two groups of electrode assemblies 300 to connect to the corresponding electrode terminals 43, separately. Then the two groups of electrode assemblies 300 fit together to form a single piece, facilitating assembly.

In some embodiments, referring to FIG. 19, the battery cell 200 includes three electrode assemblies 300, the three electrode assemblies 300 being divided into two groups, where one group has one electrode assembly 300, the other group has two electrode assemblies 300, and the two groups of electrode assemblies 300 are opposite each other.

In some embodiments, referring to FIG. 20, the battery cell 200 includes four electrode assemblies 300, the four electrode assemblies 300 being divided into two groups, where each group has two electrode assemblies 300 and the two groups of electrode assemblies 300 are opposite each other.

In some embodiments, referring to FIG. 21, the battery cell 200 includes four electrode assemblies 300, the four electrode assemblies 300 being stacked. It should be understood that the electrode assemblies 300 may also be stacked in a quantity of two, three, five, and the like. In other words, when the electrode assembly 300 is provided in plurality, the plurality of electrode assemblies 300 are stacked. This structure facilitates design and manufacturing.

In some embodiments, referring to FIGs. 15 to 18, the electrode assembly 300 is provided in plurality and the plurality of electrode assemblies 300 are stacked, and on the end cover 41, a lug boss 411 is provided at each position corresponding to each of the support zones 303. Stacking the plurality of electrode assemblies 300 can increase the capacity of the battery cell 200; and providing a lug boss 411 corresponding to each support zone 303 on the end cover 41 allows the body portion 30 of each electrode assembly 300 to support the end cover 41.

In some embodiments, in the thickness direction Y of the body portion 30, there are N steps 302 between two adjacent lug bosses 411, a distance between two adjacent lug bosses 411 is W, a width of each of the steps 302 is K, and W ≥ N * K + 2 mm. In other words, the sum of widths of the steps 302 between two adjacent lug bosses 411 is N * K, and configuring the distance W between two adjacent lug bosses 411 to be 2 mm greater than the sum N * K of widths of the steps 302 between the two adjacent lug bosses 411 allows the log bosses 411 to resist against the support zone 303 without squeezing the steps 302.

Generally, one or two steps 302 exist between two adjacent lug bosses 411. For example, in FIG. 18, two steps 302 exist between the two adjacent lug bosses 411. In FIGs. 19 to 21, among the two groups of electrode assemblies 300 opposite each other, two steps 302 exist between the two support zones 303 on the two adjacent and opposite electrode assemblies 300, and two steps 302 exist between the two corresponding lug bosses 411. While one step 302 exists between the two support zones 303 on the two stacked adjacent electrode assemblies in each group of electrode assemblies 300, and one step 302 exists between the two corresponding lug bosses 411.

In some embodiments, in the thickness direction Y of the body portion 30, width of each of the lug bosses 411 is less than width of the support zone 303, and width of the lug boss 411 is greater than 2 mm. Width of the lug boss 411 being smaller than width of the support zone 303 allows the support zone 303 to support the lug boss 411 well; and width of the lug boss 411 being greater than 2 mm can ensure the structural strength of the lug boss 411.

According to some embodiments of this application, this application also provides a battery cell 200 including a body portion 30, a first electrode terminal 43, and a second electrode terminal 43, where the first tab 34, the second tab 35, and the auxiliary tab 36 are led out of the body portion 30. Both the first tab 34 and the auxiliary tab 36 are electrically connected to the first electrode terminal 43, and the second tab 35 is electrically connected to the second electrode terminal 43. In this way, the first tab 34 cooperates with the auxiliary tab 36 to circulate current, enhancing the current flow capacity of the tab connected to the first electrode terminal 43, and thereby enhancing the overall current flow capacity and performance of the battery cell 200. The sum of the current flow areas of the first tab 34 and the auxiliary tab 36 is greater than or equal to the current flow area of the second tab 35. This can increase the overall current flow capacity of the first tab 34 and the auxiliary tab 36, so that the overall current flow capacity of the first tab 34 and the auxiliary tab 36 is closer to the current flow capacity of the second tab 35, thereby enhancing the current flow capacity of the battery cell 200. The first tab 34 includes a first tab root portion 341 and a first tab body 342, where the first tab body 342 is connected to the first tab root portion 341, the first tab root portion 341 is connected to the body portion 30, and width of the first tab root portion 341 is greater than width of the first tab body 342, reducing the internal resistance of the first tab 34 and enhancing the current flow capacity of the first tab 34. The second tab 35 includes a second tab root portion 351 and a second tab body 352, where the second tab body 352 is connected to the second tab root portion 351, the second tab root portion 351 is connected to the body portion 30, and width of the second tab root portion 351 is greater than width of the second tab body 352, reducing the internal resistance of the second tab 35 and enhancing the current flow capacity of the second tab 35. The auxiliary tab 36 includes the auxiliary tab root portion 361, where the auxiliary tab root portion 361 is connected to the first tab root portion 341. In this way, the auxiliary tab root portion 361 is connected to the first electrode terminal 43 via the first tab root portion 341 and the first tab body 342. This reduces the material usage and facilitates the connection to the first electrode terminal 43 and assembly. The auxiliary tab root portion 361 having an overlapping area with the second tab 35 allows sufficient width on the body portion 30 for the design of the auxiliary tab 36, which enables the provision of a wider auxiliary tab 36 to increase the current flow area of the auxiliary tab 36 and enhance its current flow capacity. The separator 33 of the body portion 30 protrudes out of the auxiliary tab root portion 361 in the height direction Z of the body portion 30, so that when the electrode assembly 300 is laminated, especially when the second tabs 35 are stacked and pressed together as a whole, the separator 33 can cover the auxiliary tab root portion 361, better isolating the auxiliary tab root portion 361 from the second tab root portion 351 and the second tab body 352. Thus, the portion of the separator 33 protruding out of the second tab root portion 351 forms an insulating structure between the auxiliary tab root portion 361 and the second tab 35, providing better insulation and protection.

According to some embodiments of this application, this application further provides a battery including the battery cell described in any one of the foregoing solutions.

According to some embodiments of this application, this application further provides an electric apparatus including the battery described in any one of the foregoing solutions.

The electric apparatus may be any one of the foregoing devices or systems using a battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising an electrode assembly, a first electrode terminal, and a second electrode terminal, **characterized in that** the electrode assembly comprises a body portion, wherein a first tab, a second tab, and an auxiliary tab are led out of the body portion, the first tab and the auxiliary tab are both electrically connected to the first electrode terminal, and the second tab is electrically connected to the second electrode terminal.

2. The battery cell according to claim 1, **characterized in that** the first tab is located at an end of the body portion in a width direction of the body portion, and an end of the auxiliary tab away from the first tab extends beyond the middle of the body portion in the width direction of the body portion.

3. The battery cell according to claim 2, **characterized in that** in the width direction of the body portion, a ratio of a sum of lengths of the auxiliary tab and the first tab to width of the body portion ranges from 0.5 to 1.

4. The battery cell according to any one of claims 1 to 3, **characterized in that** a sum of current flow areas of the first tab and the auxiliary tab is greater than or equal to current flow area of the second tab.

5. The battery cell according to any one of claims 1 to 4, **characterized in that** the first tab comprises a first tab root portion and a first tab body, width of the first tab root portion is greater than width of the first tab body, and the first tab body protrudes out of the body portion.

6. The battery cell according to any one of claims 1 to 5, **characterized in that** the auxiliary tab comprises an auxiliary tab root portion, and in a thickness direction of the body portion, the auxiliary tab root portion has an overlapping area with the second tab.

7. The battery cell according to claim 6, **characterized in that** an insulating structure is provided between the auxiliary tab root portion and the second tab.

8. The battery cell according to claim 7, **characterized in that** the second tab comprises a second tab root portion and a second tab body, the second tab root portion is connected to the body portion, and the second tab body protrudes out of the body portion; in a height direction of the body portion, the auxiliary tab root portion is level with the second tab root portion; and the body portion comprises a separator located between the auxiliary tab root portion and the second tab root portion, and a portion of the separator that extends to between the auxiliary tab root portion and the second tab root portion forms the insulating structure.

9. The battery cell according to claim 7, **characterized in that** the second tab comprises a second tab root portion and a second tab body, the second tab root portion is connected to the body portion, and the second tab body protrudes out of the body portion; and in a height direction of the body portion, height of the auxiliary tab root portion is greater than height of the second tab root portion.

10. The battery cell according to claim 9, **characterized in that** the body portion comprises a separator located between the auxiliary tab root portion and the second tab root portion, wherein the separator protrudes out of the auxiliary tab root portion in the height direction of the body portion, and a portion of the separator protruding out of the second tab root portion forms the insulating structure.

11. The battery cell according to claim 10, **characterized in that** height by which the separator protruding out of the auxiliary tab root portion is greater than or equal to 2 mm.

12. The battery cell according to any one of claims 7 to 11, **characterized in that** the insulating structure comprises an insulating adhesive provided on the auxiliary tab root portion and/or the second tab.

13. The battery cell according to any one of claims 6 to 12, **characterized in that** a first insulating plate is affixed to a surface of the second tab close to the auxiliary tab.

14. The battery cell according to any one of claims 1 to 13, **characterized in that** the second tab comprises the second tab root portion and the second tab body, the second tab root portion is connected to the body portion, the second tab body protrudes out of the body portion, and the second tab root portion has a width greater than width of the second tab body.

15. The battery cell according to any one of claims 1 to 14, **characterized in that** the first tab is integrally formed with the auxiliary tab.

16. The battery cell according to any one of claims 1 to 15, **characterized in that** the first tab and the auxiliary tab are provided as separate parts.

17. The battery cell according to claim 16, **characterized in that** the first tab is spaced apart from the auxiliary tab, wherein the auxiliary tab comprises the auxiliary tab root portion and an auxiliary tab body, the auxiliary tab root portion is connected to the body portion, and the auxiliary tab body protrudes out of the body portion and is electrically connected to the first electrode terminal.

18. The battery cell according to claim 17, **characterized in that** width of the auxiliary tab root portion is greater than width of the auxiliary tab body.

19. The battery cell according to any one of claims 1 to 18, **characterized in that** the body portion has a first end surface; the first tab and the second tab are led out of the first end surface; a region of the body portion at the auxiliary tab root portion protrudes out of the first end surface and forms a step; a support zone is formed in the middle of the first end surface in a width direction of the first end surface, and the support zone is located at a side of the step; and the battery cell further comprises an end cover, the end cover being provided with a protruding lug boss that resists against the support zone.

20. The battery cell according to claim 19, **characterized in that** height of the lug boss is greater than height of the step.

21. The battery cell according to claim 20, **characterized in that** height of the lug boss is at least 2 mm greater than height of the step.

22. The battery cell according to any one of claims 19 to 21, **characterized in that** the electrode assembly is provided in plurality and the plurality of electrode assemblies are stacked, and on the end cover, a lug boss is provided at each position corresponding to each of the support zones.

23. The battery cell according to claim 22, **characterized in that** in the thickness direction of the body portion, there are N steps between adjacent two of the lug bosses, a distance between the two adjacent lug bosses is W, a width of each of the steps is K, and W ≥ N * K + 2 mm.

24. The battery cell according to any one of claims 19 to 23, **characterized in that** in the thickness direction of the body portion, width of each of the lug bosses is less than width of the support zone, and width of the lug boss is greater than 2 mm.

25. The battery cell according to any one of claims 1 to 24, **characterized in that** the battery cell further comprises a first current collecting member and a second current collecting member, wherein the first current collecting member connects the first tab and the auxiliary tab to the first electrode terminal, and the second current collecting member connects the second tab to the second electrode terminal.

26. The battery cell according to any one of claims 1 to 25, **characterized in that** the battery cell comprises a plurality of electrode assemblies, wherein the plurality of electrode assemblies are divided into two groups, the two electrode assembly groups being opposite each other.

27. The battery cell according to any one of claims 1 to 26, **characterized in that** electrical conductivity of the first tab is less than electrical conductivity of the second tab.

28. The battery cell according to any one of claims 1 to 27, **characterized in that** thickness of the first tab is less than thickness of the second tab.

29. The battery cell according to any one of claims 1 to 28, **characterized in that** the battery cell further comprises a first electrode plate, the first electrode plate comprises an insulating substrate and conductive layers provided on two sides of the insulating substrate, respectively; and the first tab leads out of each of the conductive layers, and the auxiliary tab is led out of at least one of the conductive layers.

30. A battery, **characterized by** comprising the battery cell according to any one of claims 1 to 29.

31. An electric apparatus, **characterized by** comprising the battery according to claim 30.
